Europäisches Patentamt

European Patent Office

Office européen des brevets

(11) Publication number: **0 471 846 A1**

## EUROPEAN PATENT APPLICATION
### published in accordance with Art. 158(3) EPC

(21) Application number: 90907501.2

(22) Date of filing: 24.05.90

(86) International application number:
PCT/JP90/00662

(87) International publication number:
WO 90/14621 (29.11.90 90/27)

(51) Int. Cl.⁵: G05B 19/05

(30) Priority: 24.05.89 JP 128804/89

(43) Date of publication of application:
26.02.92 Bulletin 92/09

(84) Designated Contracting States:
DE FR GB IT NL

(71) Applicant: HITACHI, LTD.
6, Kanda Surugadai 4-chome
Chiyoda-ku, Tokyo 101(JP)

(72) Inventor: UCHIYAMA, Ryoichi 1782-1, Oaza
Ooide
Nakajou-machi Kitakanbara-gun
Niigata-ken 959-29(JP)

(74) Representative: Strehl, Schübel-Hopf,
Groening
Maximilianstrasse 54 Postfach 22 14 55
W-8000 München 22(DE)

(54) SEQUENCE CONTROLLER SYSTEM.

(57) A sequence controller system composed of a plurality of CPU modules and I/O modules, wherein a first controller system is composed of a first CPU module and at least one first I/O module connected to this first CPU module, and a second controller system is composed of a second CPU module and at least one second I/O module connected to this second CPU module. One of the modules described above has buffer means for storing data transferred between the first controller system and the second controller system, and this buffer means is controlled so as to execute and stop the data transfer between the controller system and the second controller system. Accordingly, a plurality of systems can be formed by use of the CPU modules as the division and each CPU module operates as an independent controller, makes the data exchange between the CPU modules simultaneously with the I/O data transfer, and thus improves the speed of the data exchange.

change.

Fig. 3

TECHNICAL FIELD:

The present invention relates to a sequence controller system and, more particularly, to a small-sized, low-priced, modular type sequence controller system comprising a plurality of CPU's and a plurality of I/O units.

BACKGROUND OF THE INVENTION:

A large-scale system under control is divided conventionally into blocks each assigned to a sequence controller, control of each block being confined to its assigned sequence controller. To control any two blocks in coordination under this prior art control scheme requires exchanging data between the two controllers corresponding to these blocks.

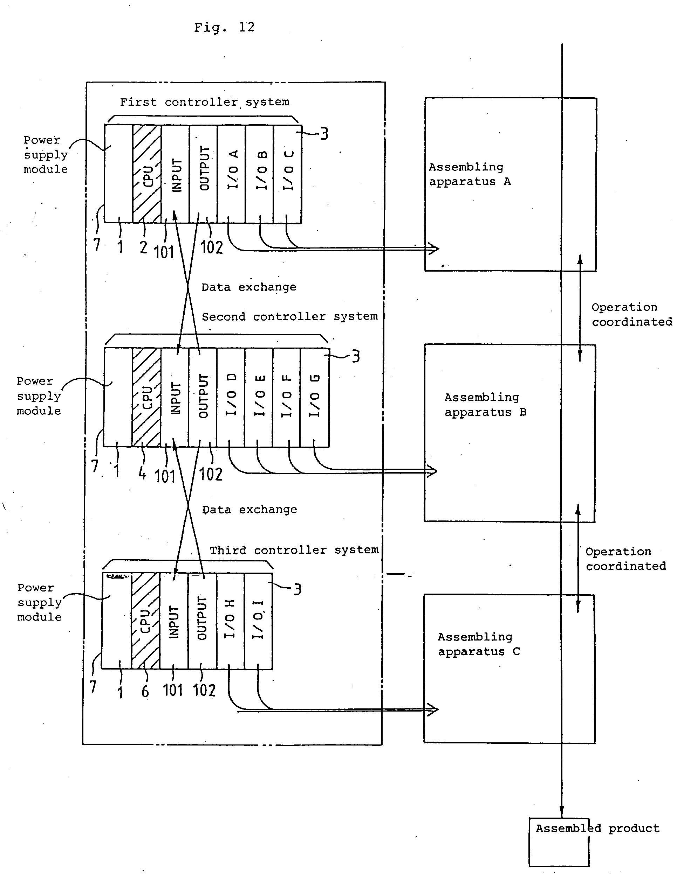

Fig. 12 illustrates an example in which the above prior art scheme is implemented. This example involves the process of assembling products in three blocks. In operation, coordinated control is provided between assembling apparatus A and B and subsequently between assembling apparatus B and C for consecutive product assembly. The assembling apparatus A, B and C are controlled by a first, a second and a third controller system, respectively. To provide coordinated control between them, the controller systems each comprise an input module 101 and an output module 102. The first and second controller systems exchange data through their input and output modules 101 and 102. The second and third controller systems do the same through their input and output modules 101 and 102.

As described, data exchange between adjoining controllers conventionally requires providing two components, i.e., input module 101 and output module 102, along with the wiring between the modules connected to the controllers. Such requirements are disadvantageous in terms of both space and cost. Because the data must travel through modules, the rate of data exchange tends to be lowered, causing delays in operations under coordinated control.

Among the related developments is one disclosed in Japanese Patent Laid-open No. 57-182203. The disclosure involves a plurality of unit sequence controllers connected in parallel by transfer lines, each controller comprising a small CPU and an I/O unit. In operation, the same data is supplied to all sequence controllers over the transfer lines. In turn, each sequence controller processes the data and outputs the result through its I/O unit according to a preset program. What is missing from this disclosure is any consideration for the data transfer between sequence controllers.

SUMMARY OF THE INVENTION:

It is therefore an object of the present invention to provide a sequence controller which is produced in small size and at low cost and which enhances the speed of control. In carrying out the invention, there is provided a sequence controller system comprising a first controller system and a second controller system, the first controller system further comprising a first CPU module and at least one first I/O module connected to the first CPU module, the second controller system further comprising a second CPU module and and at least one second I/O module connected to the second CPU module. One of the modules has a buffer that stores the data to be transmitted between the first and the second controller systems. The buffer is controlled so as to start and stop data transmission between the first and the second controller systems.

In one preferred embodiment of the invention, the CPU module of the second system contains a buffer which prevents the data from the upstream system from being transmitted direct to the I/O module of the second system. Each I/O module has a conducting means that forwards data to the next module.

Each CPU module is capable of disconnecting signal transmission lines so that the system in which it is incorporated is made distinct from the other systems. By extending the wiring of signal transmission lines, each I/O module may expand the scope of the system in which it is contained. These provisions make it possible to provide a plurality of controller systems, the scope of each system being established as desired.

One advantage of the present invention is that a plurality of CPU modules and the I/O modules connected thereto may be located where desired, each group of the CPU and I/O modules working as an independent controller. Another advantage of the invention is that the data exchange, carried out between CPU modules simultaneously with I/O data transfer, involves less delays. This eliminates the need for a module arrangement dedicated to the data exchange function. To sum up, the sequence controller system according to the invention is produced in small size and at low cost, provides control at high speeds and prevents delays during coordinated control operations.

BRIEF DESCRIPTION OF THE DRAWINGS:

Fig. 1 is a perspective view showing a first embodiment of a sequence controller according to the invention;
Fig. 2 is a plan view of the wiring on a mother board for use with the first embodiment;
Fig. 3 is a block diagram depicting how CPU modules and I/O modules are illustratively connected to one another in the first embodiment;

Fig. 4 is a block diagram showing the construction of a CPU module for use with the first embodiment;

Fig. 5 is a block diagram illustrating the construction of an I/O module for use with the first embodiment;

Fig. 6 is a timing chart depicting how a CPU module of the first embodiment operates;

Fig. 7 is a plan view showing slot position identification lines used in the first embodiment;

Fig. 8 is a block diagram depicting the construction of a second embodiment of the sequence controller according to the invention;

Fig. 9 is a block diagram illustrating how data is exchanged between the controller systems shown in Fig. 9;

Fig. 10 is a timing chart showing how each of the systems in the second embodiment operates;

Fig. 11 is a block diagram depicting the construction of a third embodiment of the sequence controller according to the invention; and

Fig. 12 is a block diagram illustrating the construction of a system employing prior art sequence controller systems.

BEST MODES OF CARRYING OUT THE INVENTION:

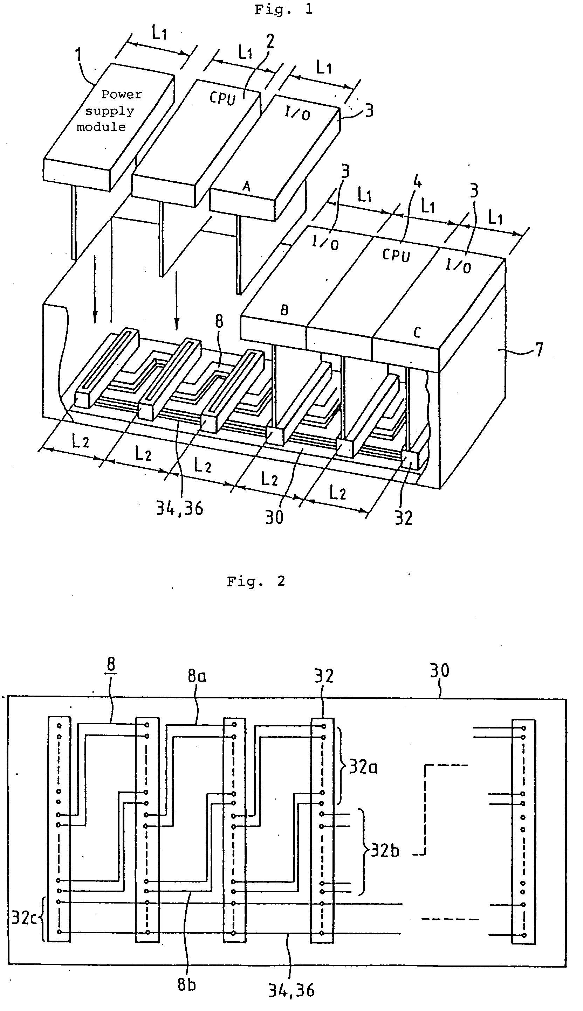

The preferred embodiments of the present invention will now be described with reference to Figs. 1 through 11.

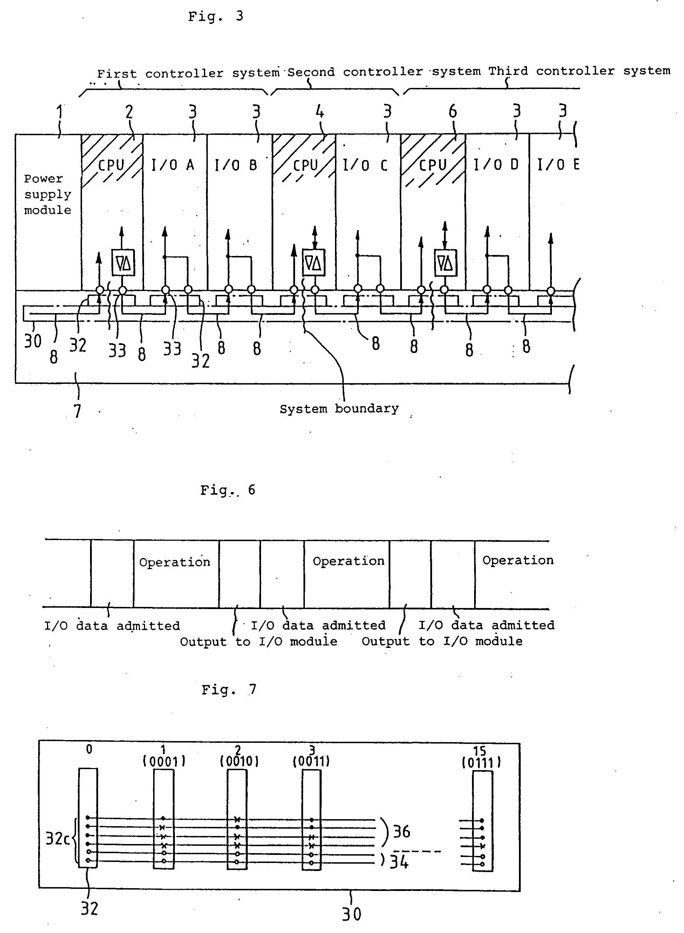

What follows is a description of the first embodiment of the invention with reference to Figs. 1 through 7. As shown in Fig. 1, the first embodiment is constituted by a mother board 30 at the bottom of an open-ended, box-shaped base 7, the mother board 30 being equipped thereon with slots 32 as connectors accommodating a power supply module 1, a CPU module 2 and an I/O module 3, the slots being interconnected by signal lines 8. As illustrated in 2, the wiring between the slots 32 on the mother board 30 comprises data transmission lines 8a and address lines 8b which connect output terminals 32b of one slot 32 to input terminals 32a of the adjoining slot 32, as well as the lines such as power supply lines 34 and slot identification lines 36 which are continuously connected to and installed across the slots. At each slot, the output terminals 32b are electrically shielded from the input terminals 32a. In the first embodiment, as depicted in Fig. 1, the power supply module 1 is connected to the leftmost slot 32 on the mother board 30. The other modules are powered by the power supply module 1 via the power supply lines 34. The power supply module 1 is mechanically connected to the slot 32 and electrically connected to the power supply terminals 32c which in turn are connected to the power lines 34. The output terminals 32b are electrically shielded from the input terminals 32a. In addition to the power supply lines 34, the power supply terminals 32c are also connected to such lines as the slot identification lines 36 that are continuously connected to and installed across the slots. Adjacent to the power supply module 1 is a first controller system, which in turn is adjoined by a second controller system, which is adjoined by a third, and so on. Fig. 3 shows an example in which three controller systems are interconnected. The CPU modules used in the systems may be of the same type. In Fig. 3, the CPU module of the second system is illustratively identified by reference numeral 4 and that of the third system by 6. On the mother board 30 in the base 7 are the signal lines 8 and the power supply lines 34. The signal lines 8 are needed to transfer data between the CPU modules 2, 4 and 6 and between the I/O modules 3. The power supply lines 34 are provided to convey power from the power supply module 11 to the other modules. The signal lines 8 comprise data transmission lines 8a and address lines 8b. The signal lines passing from the CPU modules 2, 4 and 6 through the I/O modules 3 are relayed by each I/O module. The signal lines 8 on the mother board 30 are wired independently between two adjacent slots 32. Each CPU module is connected to its I/O module via a connector 33.

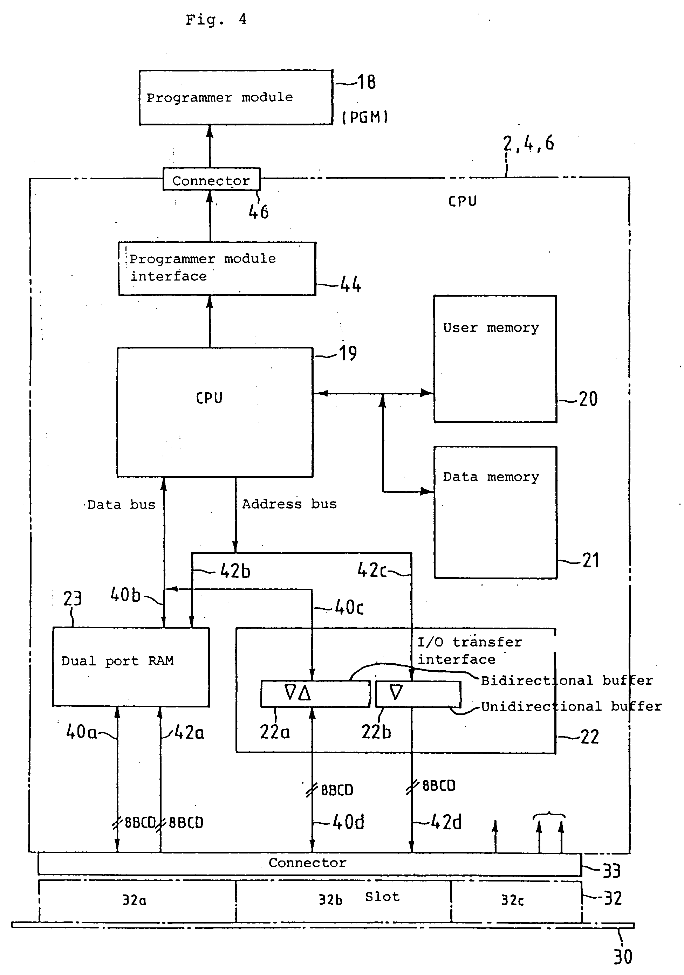

Fig. 4 depicts how the CPU modules 2, 4 and 6 are arranged in the first embodiment. The CPU modules 2, 4 and 6 each contain a CPU 19; a user memory 20 and a data memory 21 connected to the CPU 19; a data bus 40a and an address bus 42a for forwarding signals from the input terminals 32a of the slot 32 to a dual port RAM 23 which serves as an insulating means; a data bus 40b for allowing data to be exchanged between the dual port RAM 23 and the CPU 19; an address bus 42b for sending an address signal from the CPU 19 to the dual port RAM 23; a data bus 40b for exchanging data with the output terminals 32b; a data bus 40c which is connected to the data bus 40b and which exchanges signals with the data bus 40d via a buffer 22a; an address bus 42c for supplying a buffer 22b with the address signal from the CPU 19; an address bus 42d for supplying the address signal to the output terminals 32b via the buffer 22b; an I/O transfer interface 22 having the buffers 22a and 22b; a programmer module interface 44 connected to the CPU 19; and a connector 46 connected to the programmer module interface 44 and to a programmer module 18. The data buses 40a and 40b and the address buses 42a and 42d each comprise eight lines to configure an eight-bit bus structure. The dual port RAM 23, acting as the insulating means, provides signal insulation between the data buses 40a and 40d as well as between the address buses 42a and 42d. In the I/O transfer interface 22, the bidirectional buffer 22a containing registers and other parts are interposed between the data buses 40d and 40c. The buffer 22a permits bidirectional signal transmission between the CPU 19 and the I/O module 3. Also in the I/O transfer interface 22, the unidirectional buffer 22b containing registers and other parts is interposed between the address buses 42d and 42c. The buffer 22b permits unidirectional signal transmission from the CPU 19 to the I/O module 3. While the CPU modules 2, 4 and 6 are powered by the power supply module 1 via the power supply terminals 32c and the connector 33 of the slots 32, the power supply lines from the connector 33 to the modules are omitted in Fig. 4. The CPU modules detect their slot locations using position information tapped from the slot identification lines 36.

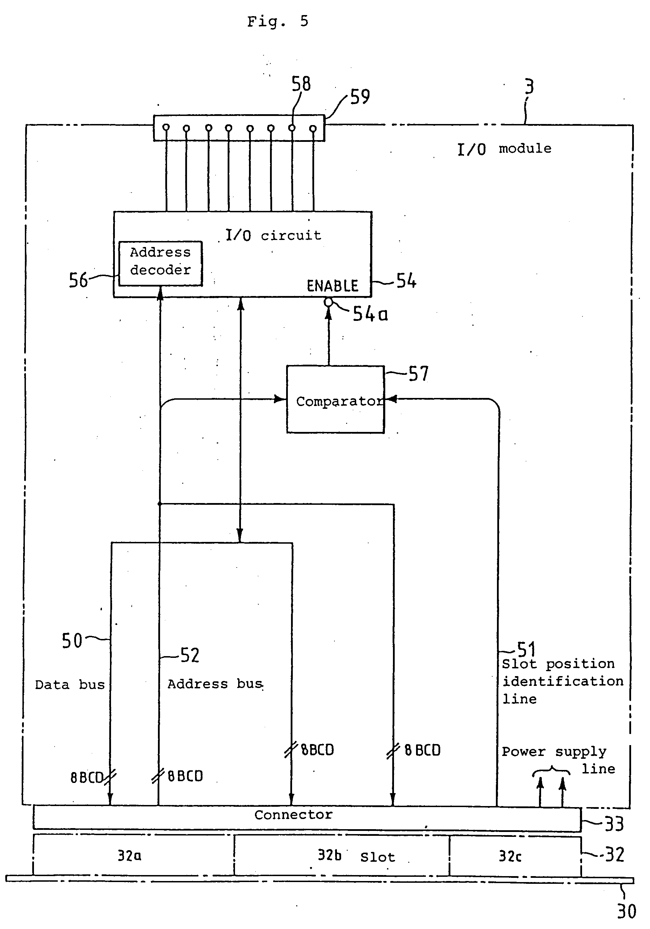

Fig. 5 shows the construction of one I/O module 3 used in the first embodiment. The I/O module 3 has a data bus 50 and an address bus 52 connected to the connector 33, the data bus 50 serving as the conducting means to connect the input terminals 32a to the output terminals 32b within the same slot 32. The data bus 50 is provided so as to permit bidirectional signal transmission between the input and the output terminals. On the other hand, the address bus 52 is provided so as to permit only unidirectional signal transmission from the input terminals to the output terminals. The I/O module 3 contains an I/O circuit 54 and a comparator 57. The I/O circuit 54 comprises an address decoder 56 and an enable terminal 54a. The comparator 57 compares the address signal on the address bus 52 with the slot identification information coming from a slot position identification line 51. In case of a match between the signal and the information, the I/O module is regarded as selected, and the comparator 57 feeds an enable signal to the enable terminal 54a. When supplied with the enable signal, the I/O circuit 54 connects terminals 58 on a terminal block 59 to the data bus 50. Therefore, if the I/O module 3 operates as an input module, the signal at the terminals 58 is supplied to the data bus 50; if the I/O module 3 operates as an output module, the signal on the data bus 50 is supplied to the terminals 58. Where the I/O module 3 works as an input module, the I/O circuit 54 comprises buffers and other parts; where the I/O module 3 works as an output module, the I/O circuit 54 comprises latches (e.g., flip-flop circuit) and other parts.

The slot positions of the CPU and I/O modules in the first embodiment are identified as follows:

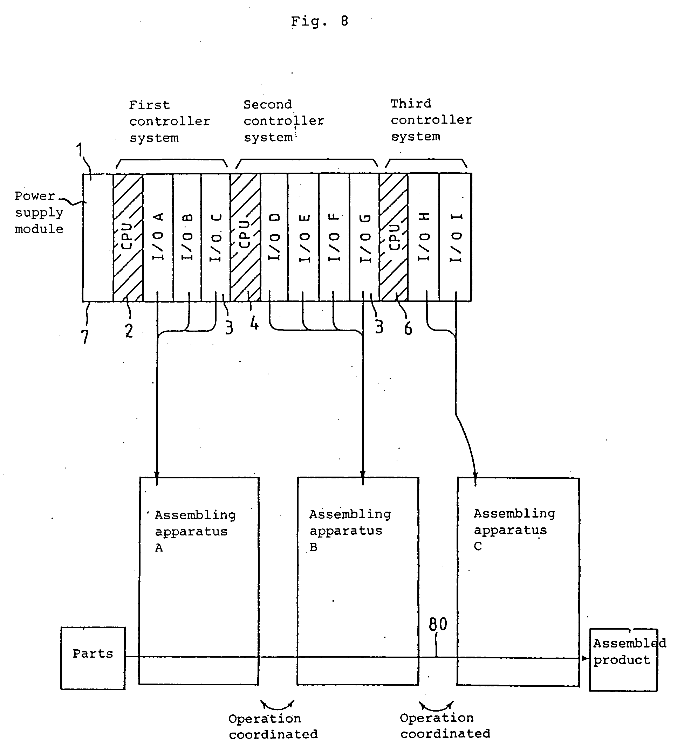

The slot identification lines 36 are provided in a quantity that matches the number of the modules connected. For example, where the number of modules is 16 or less, four slot identification lines are provided. The slot identification lines 36 are continuously connected to and installed across the slots. Assume that a total of 16 slots 32 are provided and numbered from 0 to 15 from left to right on the mother board 30. Slot No. 0 accommodates the power supply module 1 which applies a predetermined voltage (e.g., +5 V) to the four slot identification lines 36. As depicted in Fig. 7, the slot numbers 1 through 15 are each expressed in binary notation (0001 - 0111). At a point corresponding to a binary 0, the identification line is not connected to its matching terminal in the slot (indicated by a cross "x" in Fig. 7); at a point corresponding to a binary 1, the identification line is connected to its matching terminal in the slot (indicated by a solid circle in Fig. 7). Detecting these binary numbers allows each module to identify the slot in which it is inserted.

Each CPU module detects the slot in which it is inserted in the manner described above. When selecting an I/O module "n" modules away from it, the CPU module adds "n" to its own slot position number to determine the target module position.

The power supply module 1, the CPU modules 2, 4 and 6, and the I/O modules 3 of the above-described constructions each have the same dimension L1 in the longitudinal direction of the mother board 30. This means that any of the CPU and I/O modules may be physically inserted into any slot desired. A spacing L2 between two adjoining slots 32 is likewise constant (L1 shorter than L2).

How a CPU module operates will now be described. The operation of the CPU modules 2, 4 and 6 is controlled by the CPU (microcomputer) 19. When the sequence controller is in operation, a sequence program that was previously stored into the user memory 20 from the programmer module 18 is sequentially read therefrom for computation. As shown in Fig. 6, the computation involves admitting I/O data, operating on the data, and outputting the result therefrom to the I/O module. This process is performed repeatedly. The data memory 21 is a memory that stores the output data other than the I/O data out of the result of the computation. The dual port RAM 23 is a memory to and from which two CPU's may write and read the same memory contents. In the first embodiment, the data of the CPU module 4 is illustratively stored in the dual port RAM 23. Upon data exchange with the CPU module 2 on the left, the data is read from the dual port RAM 23 and the data transferred from the CPU module 2 is written thereto. This arrangement permits data exchange between CPU modules. The data transmission circuit between the CPU modules 2 and 4 is conditionally discontinued by the dual port RAM 23. By gaining access to the dual port RAM 23, the CPU module 2 or 4 may exchange data with another system through a completed data transmission circuit. That is, the dual port RAM 23 is controlled by the CPU module 2 or 4 so as to effectively make or break the data transmission circuit. Using the address buses 42c and 42d from the microcomputer 19, the I/O transfer interface 22 selects the I/O module to which to transfer data and specifies necessary terminals 58 for the selected I/O module. In addition, circuits are provided to implement bidirectional data transmission over the data buses 40c and 40d.

Because the CPU modules 2, 4 and 6 as well as the I/O modules 3 are constructed as described above, an I/O module, when inserted into a slot, has the signal lines from the two adjacent slots on both sides thereof internally connected to one another; a CPU module, when inserted into a slot, has the signal lines from the two adjacent slots on both sides thereof internally insulated from one another so as to disconnect the system.

In the first embodiment, given the constructions of the CPU modules 2, 4 and 6, the I/O modules 3 and the signal lines 8 on the mother board 30, the signal flow in the systems of Fig. 3 occurs as follows:

In the first controller system, an access signal sent by the CPU module 2 to the I/O modules 3 first reaches the module 3 immediately to the right via the signal line 8. The signal goes past the immediately rightward I/O module 3 to reach the next I/O module 3 to the right through the signal line 8. The signal transmission continues until the CPU module 4 to the right is reached, with the signal sent intact thereto. That is, the signal from the CPU module 2 is transmitted over the signal lines 8 through the I/O modules A and B (Fig. 3) up to the CPU module 4.

Under this scheme, the CPU 2 exchanges data not only with the I/O modules in the first controller system but also with the CPU module 4 in the second controller system.

The flow of an I/O data transfer signal is interrupted by the CPU module 4 to make the systems independent of one another. In this manner, no matter where its CPU module is located, the scope of a controller system is automatically designated as existing between the adjacent I/O module on the right of the CPU and another CPU in the same direction. In the second controller system, an access signal sent by the CPU 4 to the I/O module 3 travels over the signal line 8 and arrives at the I/O module 3 immediately to the right. Going past the immediately rightward I/O module 3, the signal moves on intact to the adjacent CPU module 6 to the right.

In the third controller system, an access signal sent by the CPU module 6 to the I/O modules 3 travels over the signal line 8 and arrives at the I/O module immediately to the right. Going past the immediately rightward I/O module 3, the signal moves on intact to the adjacent I/O module 3 to the right. The signal transmission continues until another CPU module on the right is reached. That is, the signal from the CPU module 4 is transmitted to the I/O module C via the signal line 8 and on to the CPU module 6. The signal from the CPU module 6 is transmitted to the I/O modules D and E via the signal line 8; the signal transmission continues until the next CPU module is encountered. In this manner, the CPU module 2 transfers I/O data to the CPU modules 4 and 6 to the right. Where data transfer is not carried out between CPU modules, the dual port RAM as the insulating means may be replaced with an open circuit or with a high resistance state. In that case, the insulating means may be provided in the last I/O module of the first controller system.

The second embodiment of the present invention will now be described with reference to Figs. 8 through 10. This embodiment involves connecting the above-described sequence controller to assembling apparatus. The second embodiment comprises a first, a second and a third controller system, the first controller system having three I/O modules 3 connected to a CPU module 2, the second controller system having four I/O modules 3 connected to a CPU module 4, the third controller system having two I/O modules 3 connected to a CPU module 6. The CPU module 2 controls an assembling apparatus A via the three I/O modules A, B and C. The CPU module 4 controls an assembling apparatus B via the four I/O modules D, E, F and G. The CPU module 6 controls an assembling apparatus C via the two I/O modules H and I. Parts to be assembled are conveyed on an assembly line 80 past the assembling apparatus A, B and C, in that order, the apparatus performing the respectively assigned assembly processes. Coordinated operation is required between the assembling apparatus A and B and also between the assembling apparatus B and C.

In the second embodiment, the CPU module 2 exchanges data with the I/O modules A, B and C; the CPU module 4 exchanges data with the I/O modules D, E, F and G; and the CPU module 6 exchanges data with the I/O modules H and I. The CPU modules each control the assembling apparatus A, B and C independently. The data exchanges made through I/O modules in the comparable prior art setup are replaced in the second embodiment with those between the CPU modules 1 and 2 and between the CPU modules 2 and 3. As illustrated in Fig. 7, data is exchanged direct between CPU modules in the second embodiment. This means that there is no need for those I/O modules together with the wiring therebetween which are required for the data exchanges in the prior art setup.

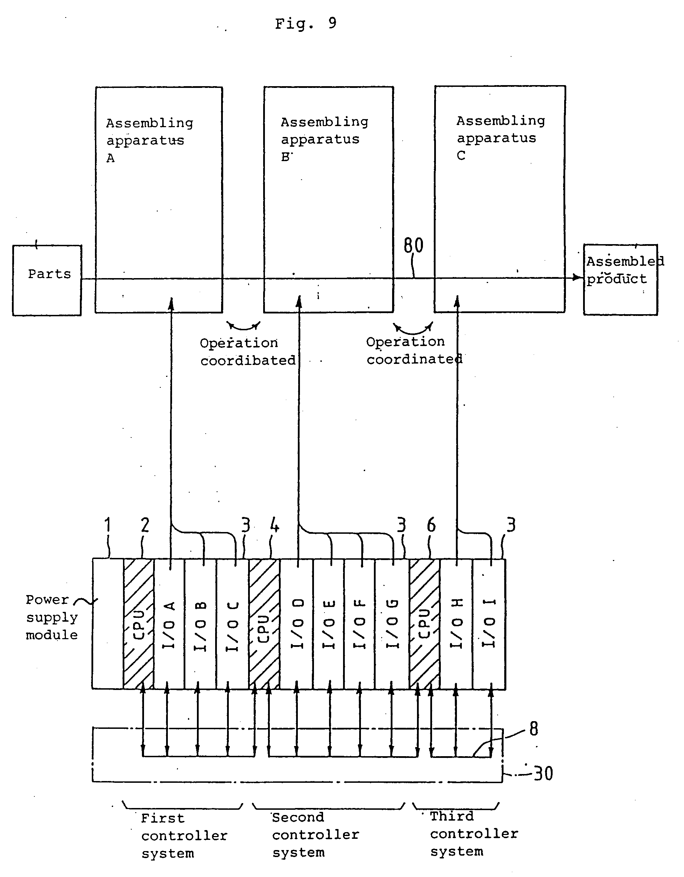

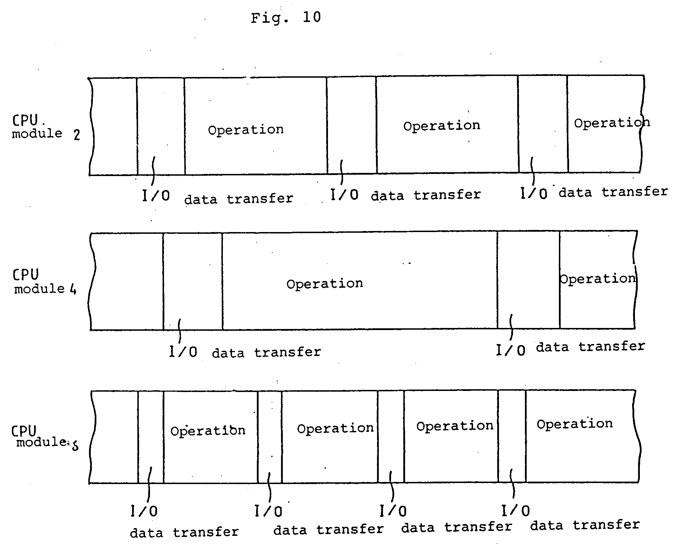

Fig. 9 depicts the range of I/O data transfer carried out by the CPU modules 2, 4 and 6 in the embodiment of Fig. 8. The CPU module 2 performs I/O data transfer across the I/O modules A through C to the CPU module 4. The I/O modules A through C constitute a controller for the assembling apparatus A. The CPU module 2 exchanges data with the CPU module 4 to provide coordinated control between the first and the second controller systems. The CPU module 4 carries out data transfer across the I/O modules D through G to the CPU module 6. Likewise, the I/O modules G through G under the CPU module 4 control the assembling apparatus B, and the CPU module 4 exchanges data with the CPU module 6. The CPU module G performs data transfer to the I/O modules H and I alone and controls the assembling apparatus C. To have data exchanged between the CPU modules 2 and 6 requires the intervention of the CPU module 4, e.g., transferring data from the CPU module 2 to 4 to 6 or from the CPU module 6 to 4 to 2. However, direct data exchange between the CPU modules 2 and 6 is made possible by use of a certain CPU module arrangement to be described later. As shown in Fig. 9, the signal lines 8 on the mother board 30 are compartmentalized to each CPU module so as to form an independently operating controller system centering on each CPU. These independent controller systems operate asynchronously with one another, as illustrated in Fig. 10.

As described, each CPU that runs independently transfers data not only to the I/O modules but also to the CPU modules located to the right. This permits immediate, direct data exchange between CPU modules with minimum delays of data transmission.

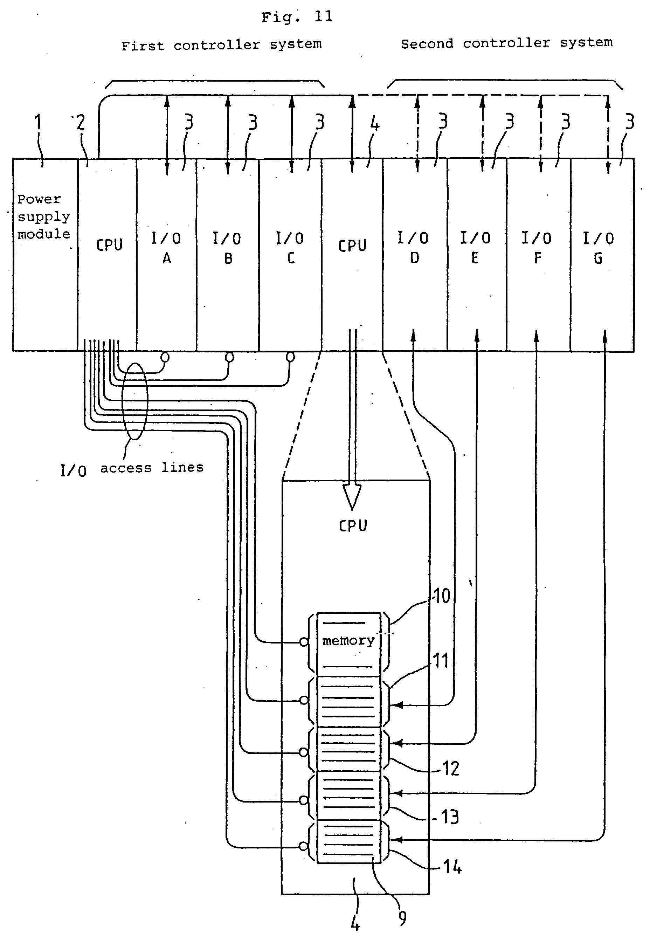

The third embodiment of the present invention will now be described with reference to Fig. 11. This embodiment involves getting the CPU module 2 in the first controller system to exchange data with the I/O modules in the second controller system without the intervention of the CPU 19 in the CPU module 4. Fig. 11 gives a magnified view of the CPU module 4 for explanation purposes.

In the third embodiment, as illustrated in Fig. 11, the CPU module 4 contains a memory 9 in which to store the data of the I/O modules located to the right. In the example of Fig. 11, the CPU module 4 places in the memory 9 the data to be transferred to the I/O modules D, E, F and G. The CPU module 2 to the left starts transferring the data to the I/O modules A, B and C, in that order. The CPU module 4 then performs its data transfer for subsequent data exchange. The next address lines enable memory areas 9a, 9b, 9c, 9d and 9e in the CPU module 4 to be selected, the areas containing the I/O data. This allows the CPU module 2 to carry out data transfer apparently direct to each of the memory areas corresponding to the I/O modules D, E, F and G. Therefore, each CPU module may transfer data to all I/O modules and CPU modules located to the right thereof. This feature significantly expands the scope of the sequence controller in functionality.

In any of the embodiments described, each system is allowed to operate independently. Because the power supply module of each system may be shared and because of the absence of the need for specialized I/O modules for data transfer between systems, the scope of the systems is made smaller, and the cost thereof is reduced correspondingly.

EXPLOITATION IN INDUSTRY:

Where data is to be exchanged between different controller systems, the present invention proposes having one module in a system equipped with a buffer that stores the data to be transferred between the systems. Because data is transferred direct between the systems via this buffer, there is no need for dedicated I/O modules or specialized communication modules. This scheme provides a small-sized, low-priced sequence controller that provides high-speed control.

**Claims**

1. A sequence controller system having a plurality of CPU modules and a plurality of I/O modules, said sequence controller system comprising:
   a first controller system containing a first CPU module and at least one first I/O module connected to said first CPU module; and
   a second controller system containing a second CPU module and at least one second I/O module connected to said second CPU module;
   one of said modules further comprising a buffer means for storing the data to be transmitted between said first controller system and said second controller system;
   said buffer means being so constructed and controlled as to start or stop said data transmission between said first controller system and said second controller system.

2. A sequence controller system according to claim 1, wherein said module containing said buffer means is said second CPU module.

3. A sequence controller system according to claim 1, wherein said module containing said buffer means is installed in the last module position of said first controller system.

4. A sequence controller system according to claim 1, further comprising:

a plurality of connectors provided at predetermined intervals on a mother board; and

data lines and address lines for connecting said connectors;

said first controller system and said second controller system having each of the I/O modules thereof provided with a conducting means for connecting said data lines to one another as well as said address lines to one another;

said second CPU module comprising said buffer means.

5. A sequence controller system according to claim 1, wherein said second CPU module contains a storing means for storing the I/O data of said second I/O module.

6. A sequence controller system according to claim 1, wherein said buffer means is a dual port RAM provided in said second CPU module.

7. A sequence controller system according to claim 1, wherein said second controller system is provided adjacent to said first controller system, and wherein said module containing said buffer means in either said first controller system or said second controller system is provided adjacent to the next controller system.

8. A sequence controller system having a plurality of CPU modules and a plurality of I/O modules, said sequence controller system comprising:

a first controller system containing a first CPU module and at least one first I/O module connected to said first CPU module; and

a second controller system containing a second CPU module and at least one second I/O module connected to said second CPU module;

wherein said first CPU module is so constructed and controlled as to connect and disconnect said second CPU module to and from said I/O module of said second controller system.

9. A sequence controller system according to claim 8, further comprising:

a plurality of connectors provided at predetermined intervals on a mother board; and

data lines and address lines for connecting said connectors;

said first controller system and said second controller system having each of the I/O modules thereof provided with a conducting means for connecting said data lines to one another as well as said address lines to one another;

said second CPU module having an insulating means for insulating said data lines from one another as well as said address lines from one another.

10. A sequence controller system according to claim 9, wherein said insulating means is a dual port RAM provided in said second CPU module.

11. A sequence controller system having a plurality of CPU modules and a plurality of I/O modules, said sequence controller system comprising:

a first controller system containing a first CPU module and at least one first I/O module connected to said first CPU module; and

a second controller system containing a second CPU module and at least one second I/O module connected to said second CPU module;

one of said modules further comprising an insulating means for stopping data and address transmission between said first controller system and said second controller system.

12. A sequence controller system according to claim 11, wherein said module containing said insulating means is said second CPU module.

13. A sequence controller system according to claim 11, wherein said module containing said insulating means is installed in the last module position of said first controller system.

14. A sequence controller system according to claim 11, further comprising:

a plurality of connectors provided at predetermined intervals on a mother board; and

data lines and address lines for connecting said connectors;

said first controller system and said second controller system having each of the I/O modules thereof provided with a conducting means for connecting said data lines to one another as well as said address lines to one another;

said second CPU module having said insulating means.

15. A sequence controller system according to claim 11, wherein said second CPU module has a storing means for storing the I/O data of said second I/O module.

16. A sequence controller system according to claim 11, wherein said insulating means is a dual port RAM provided in said second CPU module.

17. A sequence controller system according to claim 11, wherein said second controller system is provided adjacent to said first controller system, and wherein said module containing said insulating means in either said first controller system or said second controller system is provided adjacent to the next controller system.

18. A sequence controller system having a plurality of CPU modules and a plurality of I/O modules, said sequence controller system comprising:

a plurality of connectors arranged at predetermined intervals on a mother board, said connectors having input terminals and output terminals, said output terminals being disconnected from said input terminals;

data lines and address lines for connecting said connectors;

a first controller system containing a first CPU module connected one of said connectors and a first I/O module group connected to the connector contiguous to said first CPU module; and

a second controller system containing a second CPU module located adjacent to said first I/O module group and connected to one of said connectors, and a second I/O module group connected to the connector contiguous to said second CPU module;

wherein one of said modules in either said first controller system or said second controller system has an insulating means for insulating said data lines from one another as well as said address lines from one another.

19. A sequence controller system according to claim 18, wherein said module containing said insulating means is interposingly provided between said first controller system and said second controller system.

20. A sequence controller system according to claim 18, wherein said module containing said insulating means is said second CPU module.

21. A sequence controller system according to claim 18, wherein said module containing said insulating means is installed in the last module position of said first controller system.

22. A sequence controller system according to claim 18, wherein said second CPU module has a storing means for storing the I/O data of said second I/O module group.

23. A sequence controller system according to claim 18, wherein said insulating means is a dual port RAM provided in said second CPU module.

Fig. 1

Fig. 2

Fig. 3

First controller system Second controller system Third controller system

Power supply module | CPU | I/O A | I/O B | CPU | I/O C | CPU | I/O D | I/O E

System boundary

Fig. 6

| | Operation | | | | Operation | | | | Operation |

I/O data admitted    I/O data admitted    I/O data admitted
Output to I/O module    Output to I/O module

Fig. 7

0    1 (0001)    2 (0010)    3 (0011)    15 (0111)

32c    36    34    32    30

Fig. 4

Fig. 5

I/O module

58  59

3

I/O circuit

Address decoder

56

ENABLE  54

54a

Comparator  57

50

52

51
Slot position
identification
line

Data bus

Address bus

8BCD

8BCD

8BCD

8BCD

Power supply
line

8BCD

8BCD

Connector  33

32a  32b Slot  32c  32

30

Fig. 8

Fig. 9

Fig. 10

Fig. 11

First controller system          Second controller system

I/O access lines

Fig. 12

# INTERNATIONAL SEARCH REPORT

International Application No PCT/JP90/00662

## I. CLASSIFICATION OF SUBJECT MATTER (if several classification symbols apply, indicate all) ⁶

According to International Patent Classification (IPC) or to both National Classification and IPC

Int. Cl⁵　　G05B19/05

## II. FIELDS SEARCHED

### Minimum Documentation Searched ⁷

| Classification System | Classification Symbols |
|---|---|
| IPC | G05B19/05 |

Documentation Searched other than Minimum Documentation
to the Extent that such Documents are Included in the Fields Searched ⁸

| | |
|---|---|
| Jitsuyo Shinan Koho | 1932 - 1990 |
| Kokai Jitsuyo Shinan Koho | 1971 - 1990 |

## III. DOCUMENTS CONSIDERED TO BE RELEVANT ⁹

| Category * | Citation of Document, ¹¹ with indication, where appropriate, of the relevant passages ¹² | Relevant to Claim No. ¹³ |
|---|---|---|
| Y | JP, A, 63-268004 (Koyo Denshi Kogyo K.K.), 4 November 1988 (04. 11. 88), (Family: none) | 1 - 23 |
| Y | JP, U, 60-10307 (Toshiba Corp.), 24 January 1985 (24. 01. 85), (Family: none) | 1 - 23 |
| Y | JP, A, 58-84307 (Toshiba Machine Co., Ltd.), 20 May 1983 (20. 05. 83), (Family: none) | 18 - 23 |
| A | JP, A, 63-113603 (Yasukawa Electric Mfg. Co., Ltd.), 18 May 1988 (18. 05. 88), (Family: none) | 1 - 23 |

* Special categories of cited documents: ¹⁰

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| September 10, 1990 (10. 09. 90) | September 25, 1990 (25. 09. 90) |

| International Searching Authority | Signature of Authorized Officer |
|---|---|
| Japanese Patent Office | |

Form PCT/ISA/210 (second sheet) (January 1985)